# EUROPEAN PATENT APPLICATION

(11) **EP 2 092 830 A1**
(43) Date of publication of application: **26.08.2009**
(21) Application number: 09152515.4
(22) Date of filing: 11.02.2009
(51) Int. Cl.: A22C 17/08

(54) **A unit for recovering salt in ham-working lines**

(30) Priority: 20.02.2008 IT RE20080023; 03.12.2008 IT RE20080115
(71) Applicant: Macchine Soncini Alberto S.P.A., 43013 Langhirano (Parma) (IT)
(72) Inventor: Soncini, Alberto, 43013, Langhirano (Parma) (IT)
(74) Representative: Corradini, Corrado

(57) **Abstract**

An apparatus for removing salt from hams being conveyed by a supply line, removal of the salt taking place by aspiration generated by a pneumatic machine (4), the pneumatic machine comprising an aspiration group which is connected to a separator device (5), the separator device in turn being connected to an aspiration mouth of the pneumatic machine, and in which the aspiration group (10) is located above the ham supply line (21) and is provided with a plurality of aspiration nozzles (480) located at ends of respective arms (450) which are arranged side by side and which oscillate freely, the arms being mobile independently in order to adapt to the irregular surface of the hams.

## Description

The invention relates to a unit for recovering salt in ham working lines.

More generally, the present invention relates to an equipment for removing salt distributed on the surface of food products, typically seasoned salt meats, among which Parma ham and Speck, and recuperating the salt.

The following description relates to hams, while it is to be understood that the definition covers the other types of products mentioned above.

As is known, preparation of hams includes a stage of salting, in which the fresh leg of pork is treated with a mixture of salt and herbs and spices, both dry and moist, which serves to give taste to the meat and to ensure correct dehydration thereof, before the seasoning stage.

The salt can be simply poured onto the meat to be treat, or can be applied by brushing with special rubber brushes.

Nowadays the salting is done using mechanised plants, which comprise a linear transporter which advances the hams, and one or more operating stations, for pouring on the salt and possibly for brushing the units as they advance on the conveyor.

After the salting operation the product is kept at a suitable temperature in a cold store for a certain amount of time.

When a product leaves the cold store, excess salt must be removed before the product is sent for a second salting operation, or for the curing operation.

The excess salt, which is generally damp, is removed by blowing compressed air through a suitable shaped nozzle. The salt thus removed falls on the conveyor, and from there to the floor, or inside the machines.

It is therefore normal during processing operations for the salt to form incrustations on the conveyor, and for it to slip into the interstices between the various components of the conveyor, dirtying the components and sometimes compromising their functioning.

In the present invention, the removal of the salt from the surface of the hams can also be done by aspirating the salt directly from the surface of the ham or other sacked meat.

An aim of the present invention is to make available a unit for removing salt from hams by blowing and for recovering and re-using the salt removed from the hams, and in general for cleaning ham-salting lines.

A further aim of the invention is to make available a unit for removing excess salt from the surface of the hams and also for recovering the salt.

A further aim of the invnention is to make available a unit which exhibits great versatiliaty and is able to function excellently independently of the irregular shape of the hams and similar food products to which it is applied, while at the same time guaranteeing recovery of the removed salt.

A further aim of the main invention is to make available an equipment for for recovering and re-using the salt removed from the hams, and in general for cleaning the ham-salting machines.

A further aim of the invention is to achieve the mentioned objectives with a solution that is simple, rational and relatively inexpensive.

These aims are attained by the characteristics of the invention which comprises a unit provided with a line of tubes along which are inserted, in series, a pneumatic machine, such as a compressor or a ventilator, destined to create a forced air current which runs along the line of tubes from an aspirating mouth towards an outlet mouth.

According to the invention, the unit comprises a separator device, positioned between the compressor and the aspirating mouth, which is destined to separate and collect the solid bodies, such as salt, which are transported in it,from the air current, and to make the salt available for possible re-use.

At least an air filter is preferably inserted on the tube line, which air filter is located in series between the separator device and the compressor, such as to prevent the compressor from getting clogged by grains of salt or other solid particles which might escape from the separator device.

The separator device preferably comprises a rigid container, having, for example, a cylindrical geometry of revolution with respect to the central axis thereof, which container is provided with an intake duct for directing the air current entering tangentially against the internal walls of the container, and an axial exit duct for enabling air to be expelled in an axial direction.

The separator device is in practice a cyclone in which a swirling motion is impressed on the air current, such as to dissipate the kinetic energy of the heaviest solid particles, which fall by force of gravity towards the bottom of the container, while the air exits axially, entrained by the depression created by the pneumatic machine located downstream.

In a preferred aspect of the invention, the cyclone comprises a transversal separator wall which, internally of the container, separates a lower first chamber from an upper second chamber into which the intake duct opens.

The transversal separator wall is fixed and comprises a circumferential series of deviator blades, which are all inclined in a same direction, such as to deviate the air passing from the upper second chamber to the lower first chamber in a tangential direction.

In this way, the deviator blades accelerate the swirl of air internally of the container, thus more efficiently performing the centrifugal separation of the salt grains, which accumulate on the bottom of the lower chamber.

In a further preferred aspect of the invention, the separator device further comprises an extension tube of the outlet duct, which develops axially internally of the container, for a limited tract before the intake duct mouth, such as to obstruct direct outflow of the air introduced via the duct.

The extension tube preferably crosses the upper second chamber of the container, and opens internally of the lower first chamber, entering in a central opening of the transversal separator wall.

In its simplest embodiment the invention has the aspiration mouth of the pneumatic machine located in connection, by means of a flexible tube of an appropriate length, with an aspiration nozzle, while the outlet mouth is placed in communication by a flexible tube of a convenient length, with an ejector nozzle.

In a second most advantageous embodiment, an aspirating device is connected to the aspiration mouth of the pneumatic machine, which aspirating device goes into contact with the ham, and is provided with a plurality of aspirating nozzles located the the end of respective side-by-side oscillating arms, the arms being mobile independently of one another such as to adapt to the irregular surface of the hams.

The aims of the invention are attained by a plant having the characteristics stated in the independent claim.

The dependent claims delineate preferred and/or particularly advantageous aspects of the invention.

Further characteristics and advantages of the invention will better emerge from a reading of the following description, which is provided by way of nonlimiting example, with the aid of the figures of the accompanying drawings, in which:

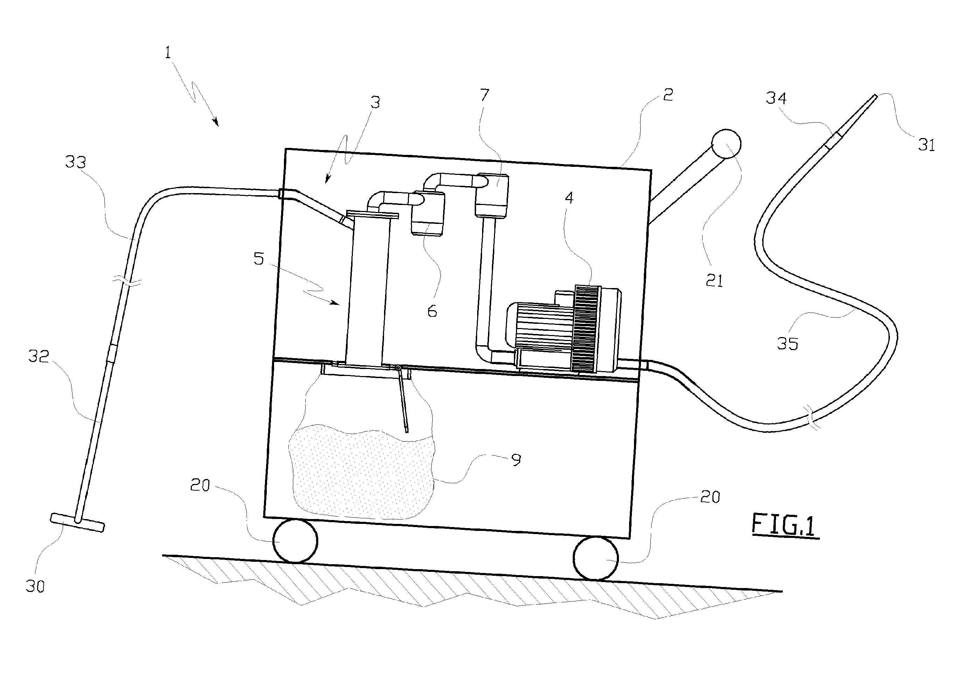

figure 1 is a schematic lateral view of a machine of a first embodiment of the invention;
figure 2 shows a plant diagram of the air tube line installed on the machine of figure 1;
figure 3 is section III-III of figure 2, shown in enlarged scale;
figure 4 is a perspective view of the separator wall mounted internally of the separator device (denoted by a broken line) of the tube line of figure 2;
figure 5 shows a schematic lateral view of an apparatus of the invention;
figures 6 and 7 show a plan view and a lateral view of an aspiration group of the separator device of figure 5;
figures 8 and 9 show a first and a second component of the aspiration group of the separator device of figure 5;
figure 10 shows one of the arms belonging to the aspiration group of the separator device of figure 5.
figure 11 shows an axonometric view of the salt aspiration group of the separator device of figure 5.
figure 12 shows a view along section XII-XII of figure 5; and
figure 13 shows a variant of the apparatus of figure 5.

With reference to figures from 1 to 4, the equipment 1 comprises a support trolley 2, which is provided with wheels 20 such as to be able to move over the floor when pushed or drawn manually by a user, and also comprises a handle 21.

A line of tubes, denoted in its entirety by 3, is mounted on the support trolley 2, which line of tubes 3 guides an air current which runs from an intake mouth 30 towards an ejector nozzle 31.

Mounted along the tube line 3 are a compressor 4, for generating an air current, and a separator device, denoted in its entirety by 5, which is interposed between the compressor 4 and the intake mouth 30, and is for separating the solid bodies transported in the air flow from the flow itself.

The compressor 4 is a blade-type compressor and thus comprises an electric motor which rotates an impeller inserted along the tube line 3.

The compressor 4 is preferably of such a size as to be able to generate a maximum pressure difference of not less than 200 mbar.

Obviously the centrifuge compressor 4 can be substituted by a pneumatic machine of any other known type having the same characteristics.

The intake mouth 30 is located at an end of a length-adjustable rigid rod 32, which is connected to the separator device 5 by a flexible duct 33, making it easier to handle for the user.

Similarly, the ejector nozzle 31 is located at an end of a rigid lance 34, which is connected to the compressor 4 by means of a flexible conduit 35, such as also to be easier to handle.

The separator device 5 and the compressor 4 are connected by rigid tubes, along which two air filters are mounted in series, a first filter 6 being for retaining the larger solid particles escaping from the separator device 5 and a second filter 7, interposed between the first filter 6 and the compressor 4 being for retaining the smaller particles that might not be captured by the filter 6.

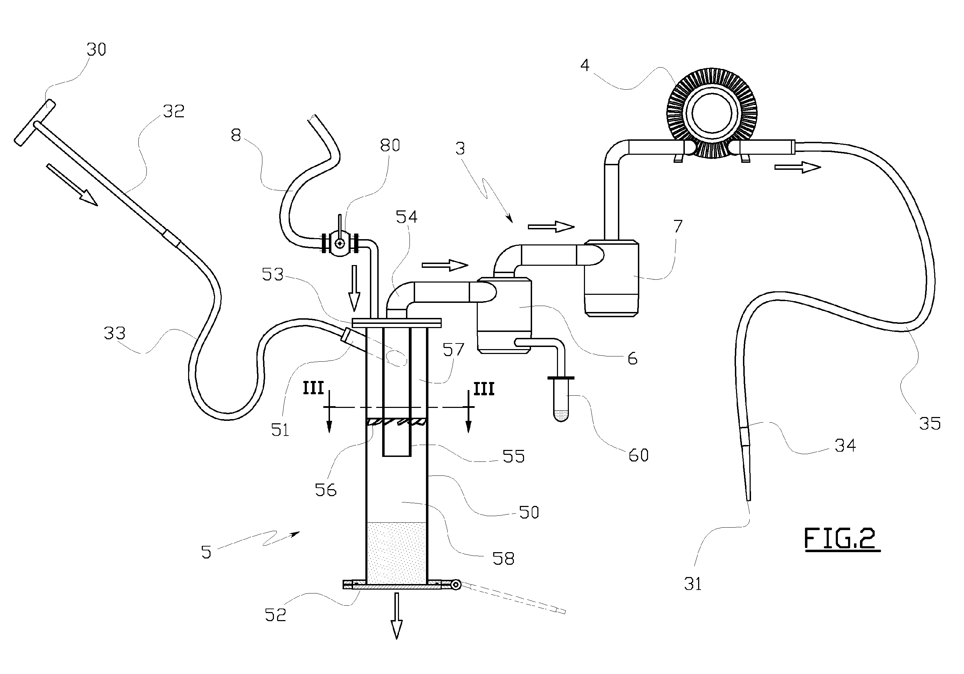

The first filter 6 is provided with an inspection device 60 (see figure 2) and is equipped with a steel-mesh filtering cartridge which can easily be dismounted and cleaned every time the inspection device 60 signals that the filter is blocked.

The second filter 7 is equipped with a paper filtering cartridge.

The separator device 5 comprises a rigid external container 50 having a geometry of revolution about a central axis of symmetry which in the present example is cylindrical.

The container 50 is mounted in a vertical position, and is located above an opening from which an underlying service chamber is accessible, where a removable recipient 9 is housed, typically a bag, for collecting the solid bodies which have been separated from the air current.

As illustrated in figure 2, the container 50 is provided with an intake duct 51, communicating with the intake mouth 30, which opens on the lateral cylindrical wall of the container 50, the mouth 30 being oriented in a tangential direction of the container 50, and the mouth 30 also being slightly inclined in an axial direction.

In this way, the intake duct 51 is destined to direct the entering air current tangentially against the internal walls of the container 50, such as to create internally of the container 50 a swirling motion which develops from above in a downwards direction according to a predetermined rotation direction, which in the present example is clockwise as seen in plan view.

The container 50 is closed on the bottom by a tilting hatch 52, while it is closed at the top by a fixed lid 53, on which an outlet duct 54 is afforded that communicates with the compressor 4, which outlet duct 54 enables air to exit in an axial direction.

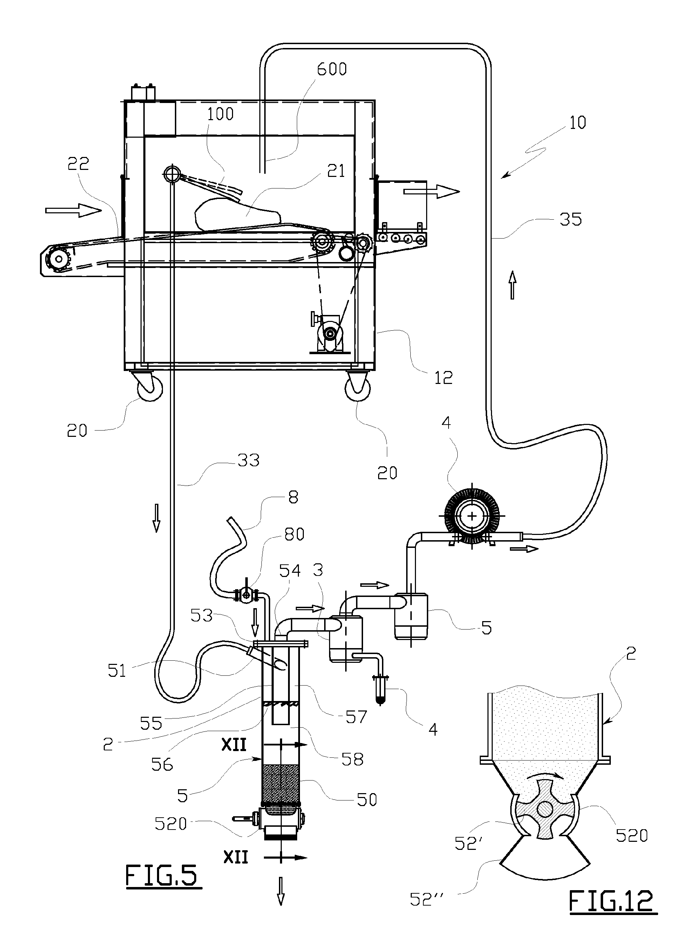

Alternatively the container 50 is closed at the bottom by an automatically-activated star valve 52 (figure 12) which exhibits a volume divided into four sectors which are arranged at 90°, and a rotating organ 52' which enables the salt which accumulates at the bottom of the separator device 2 to be conveyed to the chute opening 52", without putting the inside of the device in communication with the outside.

The outlet duct 54 extends in the form of a coaxial tube 55 which is fixed to the fixed lid 53, and which develops coaxially internally of the container 50 for a limited tract thereof, without reaching the bottom thereof.

The coaxial tube 55 has a smaller diameter than that of the external container 50, and is located substantially in front of the mouth of the intake duct 51, such as to obstruct direct outflow of the air.

In a preferred embodiment, the container 50 is about 1500 mm high and has a diameter of between 300 and 400 mm, while the coaxial tube 55 is about half as high and has a diameter which is about a quarter thereof, i.e. comprised between 75 and 100 mm.

The internal volume of the container 50 is sub-divided by a transversal wall 56 into two distinct chambers, of which one is an upper chamber 57, into which an inlet duct 51 opens, and a lower chamber 58, into which the coaxial tube 55 opens.

The upper chamber 57 is completely crossed by the coaxial tube 55, which thus gives it the shape of an annular space.

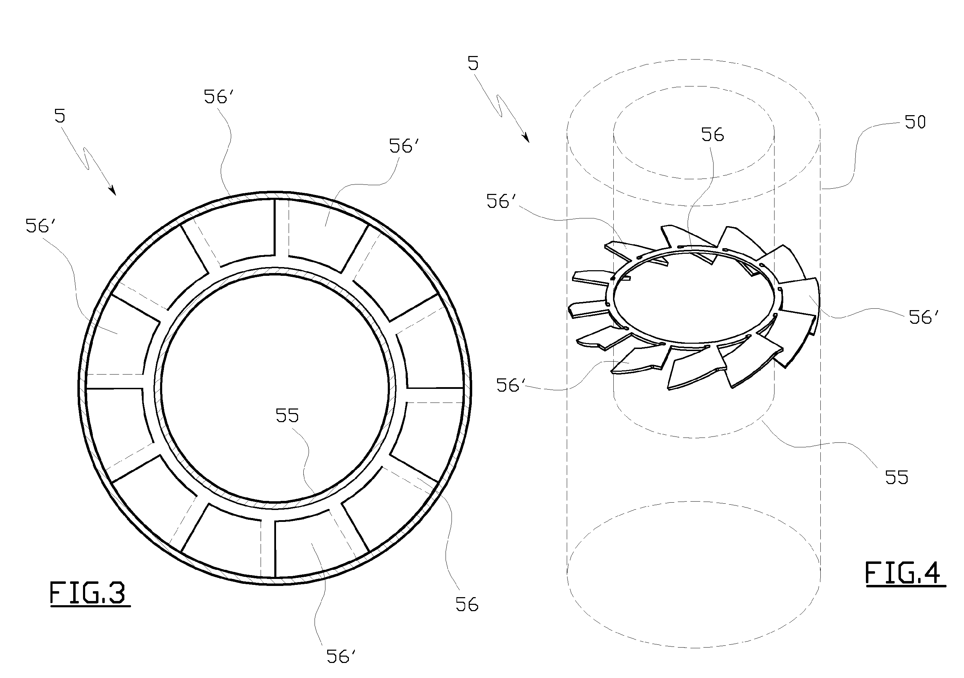

As shown in figure 4, the transversal wall 56 is substantially ring-shaped, having an external diameter which is substantially equal to the internal diameter of the container 50, and an internal diameter which is substantially equal to the external diameter of the coaxial tube 55, on which the wall 56 is inserted and stably fixed.

The transversal wall 56 comprises a circumferential series of deviator blades 56', which are all inclined successively in the same direction along the circumference.

In particular, if seen in plan view, the deviator blades 56' are inclined from above in a downwards direction and in a clockwise direction, i.e. in a same direction as the rotation direction of the swirl of air internally of the container 50.

In this way, the blades 56' accelerate the air swirl in a tangential direction which air swirl passes axially from the upper annular chamber 57 to the lower chamber 58, facilitating the centrifugal separation of the salt.

The blades 56' are preferably fashioned in a single body with the separator wall 56, by cutting and shaping of identical circumferential limbs which are singly bent along a fold line which is radial with respect to the axis of the ring.

The separator device 5 also comprises a hose 8 for dispensing a jet of water internally of the container 50, such as to facilitate washing thereof.

The hose 8 opens from the upper lid 53 and is intercepted by an opening and closing tap valve 80 for adjusting the water flow.

Figures from 5 to 13 illustrate the second preferred embodiment of the invention, and a variant; in these, the parts in common with figures from 1 to 4 and described herein above are denoted using the same reference numbers.

Figure 5 shows the apparatus 10 of the invention, which can comprise a support carriage 2 which is provided with wheels 20, and moves on the floor such as to be arranged straddling a line with a conveyor belt 220 which supplies the hams 210, the line being provided with an entrance for the salted product and an exit for the de-salted product. Alternatively the apparatus 10 can be mounted permanently on the ham supply line.

The second embodiment also comprises a line of tubes 33, 35 which guides an air current flowing from the aspiration group 4, which is described in greater detail herein below and which aspirates the salt from the surface of the hams 21, to an air ejector device 600.

The aspiration group 100 is connected to the separator device 2 via the flexible tube 33.

The line of tubes 35 can optionally be mounted on the support carriage, which line of tubes 35 guides the air current generated by the pneumatic machine 4 which flows from the aspiration group 1 towards an ejector nozzle 600, the function of which is to blow finishing air onto the de-salted hams.

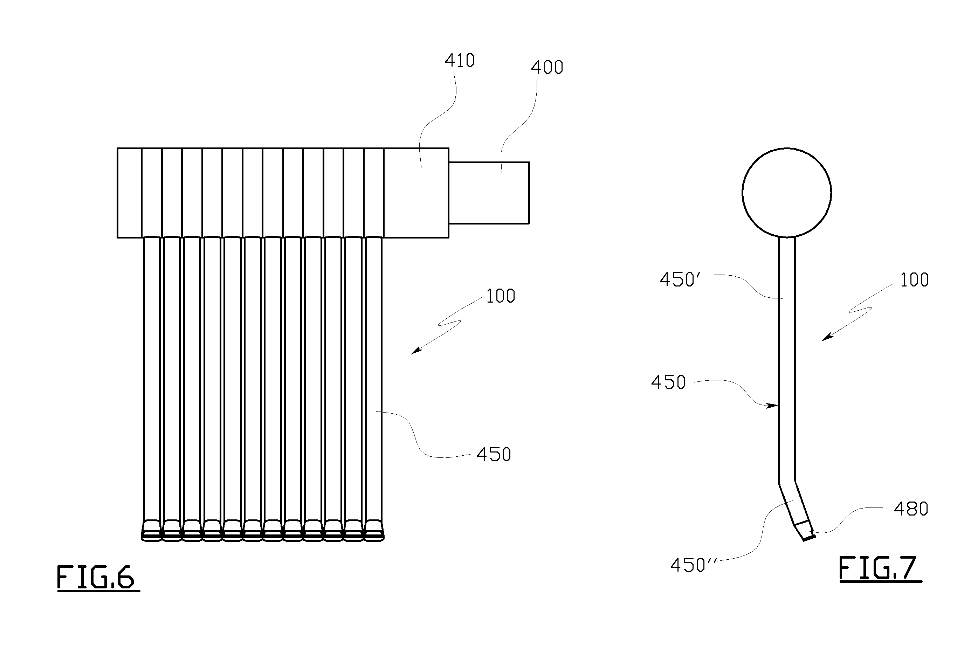

In the invention the aspiration group 100 exhibits a central tube 400, which is preferably made of stainless steel and provided with a plurality of slots 430, the slots 430 being arranged side by side on at least part of the surface of the central tube 400 (figure 6).

An intermediate tube 420, preferably made of plastic material, is connected to the central tube 400, and also exhibits a plurality of slots 440 which are arranged side by side on at least a part of the surface of the intermediate tube 420, and which, in cooperation with the slots 430 of the central tube 400, define passages for the aspirated air (figures from 8 to 10).

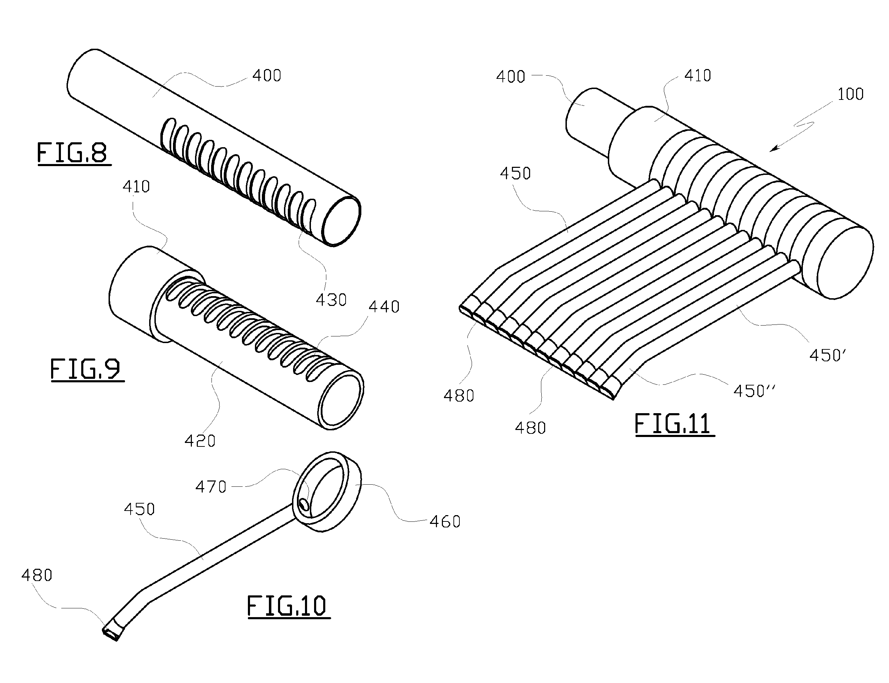

A plurality of arms 450 is inserted on the intermediate tube 420 in a stacked arrangement, reaching up as far as the wider-section hose 410 (figure 11).

The arms are internally holed (at the point denoted by reference numeral 470) and provided with a terminal nozzle 48, the nozzles 480 being arranged in such quantity that they cover the width of the ham conveyor line.

The arms 450 are preferably made of stainless steel, each arm exhibiting a holed ring 460 which can be inserted over the intermediate tube 420 in such a way that the hole 470 of the holed ring 420 cooperates with the slots 440 of the intermediate tube 42 to define passages for the aspirated air.

Preferably each of the arms 450 exhibits a substantially straight first portion 450', and an angled second portion 450" which curves in the direction of the ham to be treated and terminates with a respective nozzle 480.

Each arm 450 is supported by the tubes 400 and 410, which are arranged in a substantially horizontal position, each arm 45 being independently rotatable with respect to the others and, thanks to the shape of the slots 430 and 440, being at all times able to provide an aspiration channel.

Thanks to this configuration, the aspiration group 100, when positioned above a ham 210 advancing on the supply line, can follow the irregular form of the ham 210 with each of its arms 450, since the arms rotate under the effect of their own weight with respect to the horizontal, their nozzles 480 substantially never detaching themselves from the salted surface of the ham, thus providing optimal aspiration of the salt.

In turn, the central tube 400 and the intermediate tube 410 can be made to rotate one with respect to the other in such a way as to partialise the air flow affecting the slots 430 and 440.

Finally, the separator device 2 comprises a hose 8, which provides a water jet inside the container 50, in such a way as to facilitate the cleaning thereof.

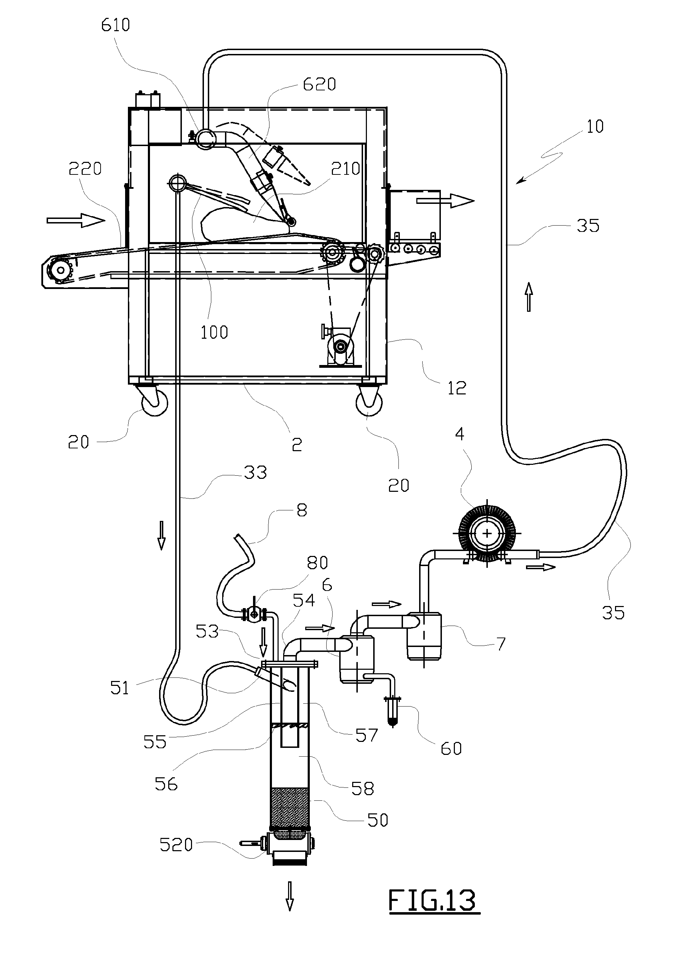

In the embodiment of figure 13, the conduit 35, which is connected to the output tube of the compressor 4, supplies a manifold 610 with compressed air, from which manifold 610 one or more oscillating outlets 620 emerge, which rest on the ham in transit under the effect of their own weight.

The outlets 620 direct an air jet on the ham in order to remove any residual salt and any liquids having residues of brine which eluded the action of the aspiration nozzles 100.

Since the air leaving the outlets 620 is warmed slightly as an effect of compression, it also performs a significant drying action.

There now follows a description of the use of the apparatus 1 for aspirating the salt in a plant for salting hams and the like.

First of all the pneumatic machine 4 is activated in order to generate a forced air current which flows along the line of tubes of the apparatus.

The air current creates an aspiration effect at the aspiration group 100.

The aspiration group 100 effectively aspirates the salt from the surface of the hams 210, since the individual arms 450 are independently capable of following the irregular surface of the hams 210 during the aspiration operation, remaining adherent to the surface of the ham 210 under the effect of their own weight.

The aspirated salt is then drawn by the air current into the separator device 5, which functions as a usual cyclone.

When the aspiration phase is complete, a finishing blow-and-dry operation can be effected on the surface of the ham 210 using the outlets 620.

In operation, when salt accumulates on the bottom of the lower chamber 58, the star valve 520 of the container 50 is automatically activated to allow the salt to be discharged without however setting the cyclone in communication with the outside, thus enabling the apparatus to function continuously.

Obviously a technical expert in the sector might make numerous modifications of a technical-applicational nature to the equipment 1 as described herein above, without its forsaking the ambit of protection of the invention as claimed herein below.

## Claims

1. A unit for recovering salt in ham-working lines, comprising a pneumatic machine (4) destined to generate an air flow along a tubing between an aspirating end and a delivery end thereof, **characterised in that** an intake duct of the pneumatic machine (4) comprises, in series and in the air flow direction, a separator device (5), and at least a first filter (6) connected to an intake port of the pneumatic machine (4).

2. The unit of claim 1, wherein the separator device (5) comprises a rigid container (50), having a geometry of revolution with respect to a central axis, which rigid container (50) is provided with a tangential intake duct (51) destined to direct the compressed-air current tangentially against internal walls of the container (50), and an axial outlet duct (54) destined to enable outlet of the air in an axial direction.

3. The unit of claim 2, wherein the separator device (5) comprises a fixed transversal separator wall (56) which, internally of the container (50) separates a first chamber (58) from a second chamber (57) into which the intake duct (51) opens, the separator wall (56) comprising a circumferential series of deviator blades (56'), which blades (56') are inclined in a same direction such as to deviate the air passing from the second chamber (57) to the first chamber (58) in a tangential direction.

4. The unit of claim 2, wherein the separator device (5) comprises an extension tube (55) of the outlet duct (54), which extension tube (55) develops axially internally of the container (50), for a tract located in front of the mouth of the intake duct (51).

5. The unit of claim 4, wherein the extension tube (55) crosses the second chamber (57) of the container (50), and opens internally of the first chamber (58), inserting into an opening in the separator wall (56).

6. The equipment of claim 2, wherein the separator device (5) comprises a hose (8) which conveys water internally of the container (50).

7. The equipment of claim 1, **characterised in that** it comprises at least a second air filter (7) in series with the first filter (6).

8. The unit of claim 2, **characterised in that** the rigid container (50) is inferiorly closed by a hatch (52).

9. The unit of claim 2, **characterised in that** the rigid container (50) is inferiorly closed by a star valve (520) which is activated automatically when salt accumulates on a bottom of the lower chamber (58), in order that the salt can be discharged without allowing air into the circuit, thus enabling the apparatus to function continuously.

10. The unit of claim 1, **characterised in that** it comprises, at the end of the aspiration tube, an aspiration group (10) located above the ham supply line (21) and is provided with a plurality of aspiration nozzles (480) located at ends of respective arms (450) which are arranged side by side and which oscillate freely, the arms (450) being mobile independently of each other such as to adapt to an irregular surface of the hams.

11. The equipment of claim 10, **characterised in that** the aspiration group (100) exhibits a central tube (400), on which the arms (450) are mounted, the central tube (400) being connected via a flexible tube (33) to the pneumatic machine (6) and being provided, at positions corresponding to positions of the arms (450), with a plurality of slots (430) arranged side by side along at least a part of the surface of the tube (400) in order to define a number of air passages.

12. The unit of claim 11, **characterised in that** each of the arms (450) affords an internal longitudinal hole (470), which internal longitudinal hole (470) opens into a respective support ring (460) of the arm (450), which support ring (460) can be arranged externally of the slots (430) of the tube (400) in such a way as to define a number of air passages.

13. The unit of claim 12, **characterised in that** an intermediate tube (410) is inserted between the rings (460) of the arms (450) and the central tube (400), which intermediate tube (410) exhibits a plurality of slots (440) arranged side by side over at least a part of the surface of the tube (420) and which cooperate with the holes (470) of the arms (450) and with the slots (430) of the central tube (400) to define passages for aspirated air.

14. The unit of claim 13, **characterised in that** the central tube (400) and the intermediate tube (420) are reciprocally angularly adjustable in such a way as to partialise air flow involving the respective slots (430, 440) and flowing from the nozzles (480).

15. The unit of claim 10, **characterised in that** each of the arms (45) exhibits a first portion (45') which is substantially straight, and a second angled portion (45") which is directed towards a ham to be treated and terminates in a terminal nozzle (48).

16. The unit of claim 1, **characterised in that** the pneumatic machine (4) is a blade compressor.

17. The unit of claim 10, **characterised in that** the pneumatic machine (4) is a blade compressor.

18. The apparatus of claim 1, **characterised in that** a flexible tube (35), ending with a blower mouth (31) for completing final de-salting and drying of the surface of the ham, is connected to the pneumatic machine (4).

19. The apparatus of claim 11, **characterised in that** the flexible tube (35) terminates in a manifold (610) which supplies at least one blower outlet (620).
